(19) Europäisches Patentamt
European Patent Office
Office européen des brevets

(11) **EP 1 192 697 B1**

(12) **EUROPÄISCHE PATENTSCHRIFT**

(45) Veröffentlichungstag und Bekanntmachung des Hinweises auf die Patenterteilung:
**27.02.2008   Patentblatt 2008/09**

(21) Anmeldenummer: **00956052.5**

(22) Anmeldetag: **28.06.2000**

(51) Int Cl.:
*H02H 11/00* (2006.01)

(86) Internationale Anmeldenummer:
**PCT/DE2000/002108**

(87) Internationale Veröffentlichungsnummer:
**WO 2001/001540 (04.01.2001 Gazette 2001/01)**

(54) **VERFAHREN ZUR VERHINDERUNG DES DRAUFSCHALTENS AUF IN ABZWEIGEN BESTEHENDE ELEKTRISCHE KURZSCHLÜSSE UND ZUGEHÖRIGE ANORDNUNG**

METHOD FOR PREVENTING SWITCHING ON ELECTRICAL SHORT CIRCUITS EXISTING IN BRANCHES AND CORRESPONDING DEVICE

PROCEDE PERMETTANT D'EMPECHER UN ENCLENCHEMENT SUR DES COURTS-CIRCUITS ELECTRIQUES EXISTANT DANS DES BRANCHES ET DISPOSITIF CORRESPONDANT

(84) Benannte Vertragsstaaten:
**DE FR GB IT**

(30) Priorität: **30.06.1999   DE 19930122**

(43) Veröffentlichungstag der Anmeldung:
**03.04.2002   Patentblatt 2002/14**

(73) Patentinhaber: **SIEMENS AKTIENGESELLSCHAFT**
**80333 München (DE)**

(72) Erfinder:
 • **HOCHGRAEF, Holger**
   **D-16845 Ganzer/Wusterhausen (DE)**
 • **GRIEPENTROG, Gerd**
   **D-91058 Erlangen (DE)**
 • **MAIER, Reinhard**
   **D-91074 Herzogenaurach (DE)**

(56) Entgegenhaltungen:
**EP-A- 0 563 695          DE-A- 19 601 878**
**US-A- 4 894 745**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Verhinderung des Draufschaltens auf bestehende Kurzschlüsse in Abzweigen, indem in einem Prüfkreis zu einem definierten Zeitpunkt der Netzspannung eine kurzzeitige Netzzuschaltung erfolgt und zumindest der Strom in einem Prüfzeitraum erfaßt und als Kriterium für einen Kurzschluß ausgewertet wird. Daneben bezieht sich die Erfindung auch auf die zugehörige Anordnung zur Durchführung des Verfahrens.

Durch das Einschalten eines kurzschlußbehafteten Abzweiges werden insbesondere Leistungsschalter und auch die restlichen Betriebsmittel sehr stark beansprucht. Grund dafür ist, daß durch den noch zu beendenden Einschaltvorgang und den nachfolgenden Ausschaltvorgang die Beanspruchungsdauer und damit das Stromwärmeintegral und der Durchlaßstrom sehr hoch sind.

Aufgrund letzterer Tatsachen ist es wünschenswert, bei einem einzuschaltenden Abzweig diesen vorab automatisch auf einen Kurzschluß zu prüfen und bei Vorliegen einer fehlerhaften Anlage die Zuschaltung zu verriegeln. Die Prüfdauer soll hierbei so kurz sein, daß keine merkliche Verzögerung der Schalthandlung auftritt und die Belastung der Anlage gering bleibt. Um Isolationsschäden, bei denen der Durchschlag bei höheren Spannungen auftritt, erfassen zu können, soll die Prüfspannung etwa dem Scheitelwert der Netzspannung entsprechen, jedoch nicht wesentlich höher als diese sein, um zusätzliche Isolationsschäden zu verhindern.

Aus der EP 0 563 695 A2 ist bereits ein Verfahren vorbekannt, bei dem im Scheitelwert der Netzspannung eine kurzzeitige Netzzuschaltung erfolgt, wofür insbesondere ein GTO (Gate Turn Off-Thyristor) verwendet wird. Als Entscheidungskriterium für das Vorliegen eines Kurzschlusses dient dabei das zeitliche Integral des Stromes im Prüfzeitraum, so daß bei Überschreitung eines Schwellwertes ein Kurzschluß erkannt wird. Bei diesem Verfahren wird der Strom nur durch den Innenwiderstand des Netzes und durch den Durchlaßwiderstand des GTO begrenzt. In Netzen mit hohem prospektiven Kurzschlußstrom fließen daher im Fehlerfall Ströme, die durch einen GTO nach dem Stand der Technik nicht mehr schaltbar sind.

Weiterhin ist aus der DE 196 01 878 A1 eine Verbindungsanordnung für Verbrauchernetze bekannt, die eine Verbindung in kurzschlußfreiem Zustand innerhalb zulässiger Betriebsgrößen mittels zumindest einer Schaltstrecke bewirkt. Dabei dient ein Zuschaltzweig parallel zur Last und ein Brückenzweig im Sinne eines Spannungsteilers zusätzlich der Sicherheit gegen Draufschalten im Kurzschlußfall.

Schließlich wird in der US 4 894 745 A eine Schutzeinrichtung gegen Überströme beschrieben, die dann wirksam wird, wenn Halbleiterbauelemente defekt sind.

Ausgehend vom Stand der Technik ist es Aufgabe der Erfindung, ein Verfahren anzugeben und eine zugehörige Schaltungsanordnung zu schaffen, mit denen das Vorliegen von Kurzschlüssen erkannt wird und auch bei Netzen mit sehr hohem prospektiven Kurzschlußstrom das Draufschalten auf im Abzweigen bestehende Kurzschlüsse verhindert werden kann.

Die Aufgabe ist bei einem Verfahren der eingangs genannten Art erfindungsgemäß durch die Maßnahmen des Patentanspruches 1 gelöst. Eine zugehörige Anordnung ist im Patentanspruch 8 angegeben. Weiterbildungen der Verfahren bzw. der Anordnung sind in den jeweils abhängigen Ansprüchen angegeben.

Bei der Erfindung wird eine zusätzliche Prüfimpedanz verwendet, wobei zur Erkennung der Kurzschlüsse allein der Prüfstrom und die Spannung ausgewertet werden. Vorteilhafterweise kann mit einer solchen Prüfimpedanz der durch den vorzugsweise verwendeten Halbleiterschalter abzuschaltende maximale Prüfstrom auf einen vorgegebenen Wert begrenzt werden. Der Wert RB einer solchen Prüfimpedanz muß dabei deutlich größer als die Netzimpedanz sein.

Mit dem erfindungsgemäßen Verfahren ist bei einer einphasigen Prüfung eine unmittelbare Auswertung von Prüfstrom und Prüfspannung zur Erkennung von Kurzschlüssen zwischen Leiter und Masse in den einzelnen Abzweigen des Leitungsnetzes möglich. Das Verfahren kann aber auch auf dreiphasige Netze ausgeweitet werden, wobei die Erkennung von Erd- bzw. Neutralleiterschlüssen sowie auch Außenleiter-Schlüssen untereinander möglich ist und die einzelnen Kurzschlüsse diskriminierbar sind.

Bei der zugehörigen Anordnung zur Realisierung der alternativen Verfahrensweisen enthält der Prüfkreis in Reihe zum im Prüfkreis verwendeten Halbleiterschalter einen Prüfwiderstand mit definiertem Widerstandswert $R_B$, der deutlich größer als die Netzimpedanz $Z_{Netz}$ ist, und ist im Prüfkreis ein Steuergerät zur gesteuerten Zuschaltung der Netzimpedanz vorhanden. Vorzugsweise ist bei Anwendung für die dreiphasige Prüfung jedem Halbleiterschalter ein eigener Prüfwiderstand zugeordnet. Da die Prüfung der einzelnen Zweige nacheinander erfolgt, können gemeinsame Einheiten zur Ansteuerung alternativ eines der Halbleiterschalter bzw. eine gemeinsame übergeordnete Steuereinheit vorhanden sein.

Weitere Einzelheiten und Vorteile der Erfindung ergeben sich aus der nachfolgenden Figurenbeschreibung von Ausführungsbeispielen anhand der Zeichnung in Verbindung mit weiteren Patentansprüchen.

Es zeigen

Figur 1    eine Schaltungsanordnung eines Halbleiterschalters und nachgeschaltetem Widerstand bei einphasiger Prüfung, die

Figur 2     den Verlauf von Prüfstrom und Prüfspannung bei unterschiedlichen Fallgestaltungen,

Figur 3     eine Schaltungsanordnung entsprechend Figur 1 bei dreiphasiger Prüfung und

Figur 4     den Algorithmus zur Erkennung von Kurzschlüssen bei der dreiphasigen Prüfung gemäß Figur 3.

In den Figuren haben gleiche bzw. gleichwirkende Teile gleiche bzw. sich entsprechend Bezugszeichen. Die Figuren werden teilweise gemeinsam beschrieben.

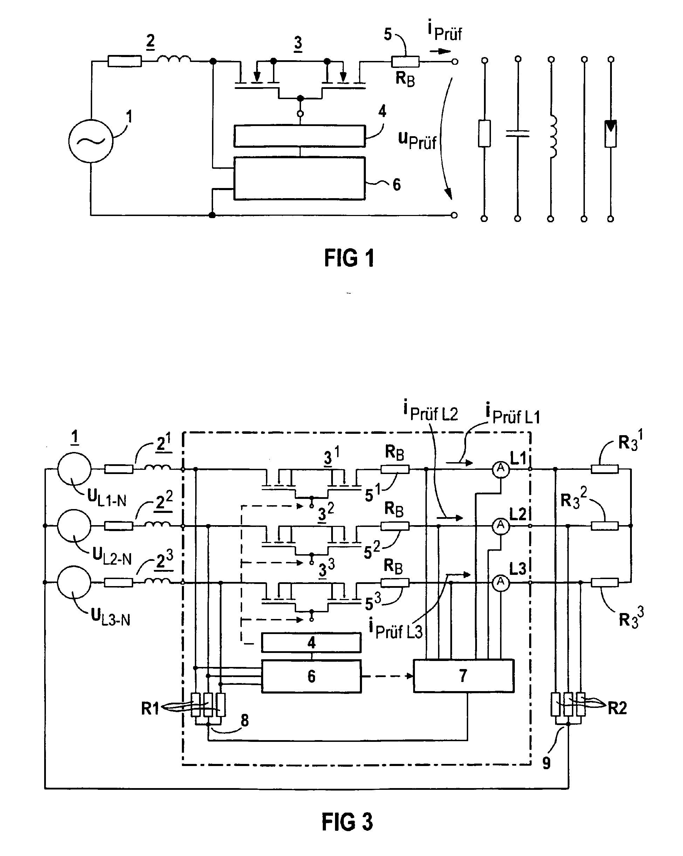

Vor der Anschaltung einzelner Abzweige eines einphasigen Netzes bzw. der einzelnen Phasen eines Mehrphasennetzes soll bereits geprüft werden, ob ein Kurzschluß vorliegt, damit in einem solchen Fall einer fehlerhaften Anlagen die Zuschaltung verriegelt wird und auf bestehende Kurzschlüsse in Abzweigen kein Draufschalten mehr erfolgen kann. Dazu ist in Figur 1 gezeigt, daß ein elektrisches Netz 1 mit darin schematisch verdeutlichter Netzimpedanz 2, die zumindest einen Ohm'schen und einen induktiven Anteil hat, durch einen Halbleiterschalter 3 auf einen Prüfwiderstand 5 mit definiertem Widerstand $R_B$ geschaltet wird.

Als Halbleiterschalter 3 wird beispielsweise ein aus antiseriell geschalteten Leistungshalbleitern gebildeter Schalter verwendet. Die Leistungshalbleiter können auf der Basis von Siliciumcarbid(SiC) aufgebaut sein. Der Halbleiterschalter 3 ist einer Ansteuereinheit 4 zugeordnet, wobei eine übergeordnete Steuereinheit 6 vorhanden ist.

In der Anordnung gemäß Figur 1 werden der Prüfstrom $i_{Prüf}$ und die Prüfspannung $u_{Prüf}$ gemessen. Angedeutet sind verschiedene Lastfälle, d.h. eine Ohm'sche Last, eine kapazitive Last und eine induktive Last des Abzweiges, sowie ein Kurzschluß als massiver Kurzschluß und als Lichtbogenkurzschluß. Letzteres ist durch das Ableitersymbol gekennzeichnet.

Unter der Voraussetzung, daß der Prüfwiderstand 5 einen genau definierten Widerstandswert $R_B$ hat, der deutlich größer als die Netzimpedanz ist, kann der durch den Halbleiterschalter 3 abzuschaltende maximale Prüfstrom auf den Wert $\sqrt{2}$ x $U_N/R_B$ begrenzt werden. Damit wird eine Zerstörung von Bauelementen vermieden.

Der Halbleiterschalter 3 wird für einen bestimmten Zeitraum, beispielsweise eine Millisekunde (ms), eingeschaltet. Zur Erkennung von Kurzschlüssen werden der Prüfstrom $i_{Prüf}$ und die Spannung $u_{Prüf}$ am Abzweig gemessen und ausgewertet.

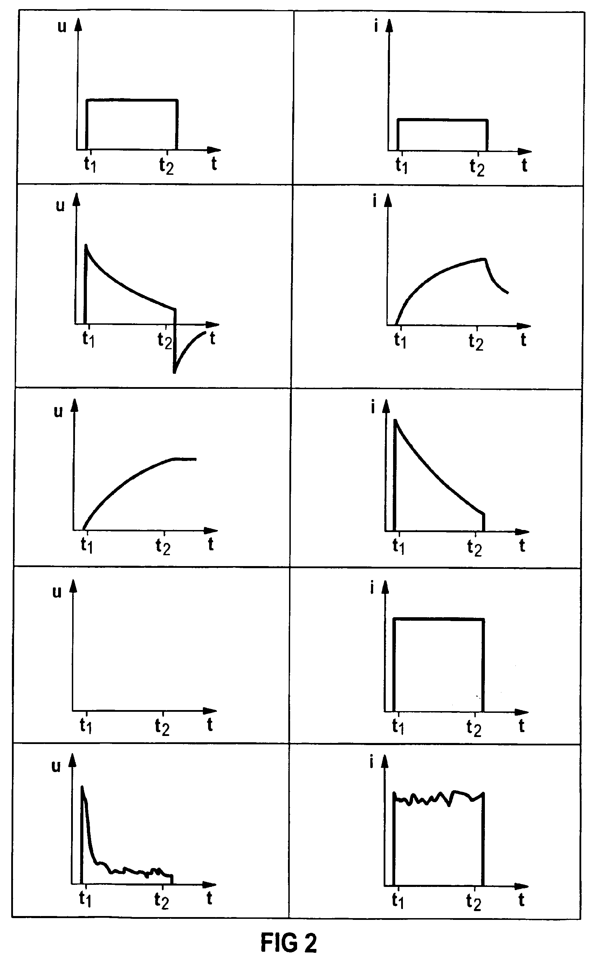

Eine Betrachtung von Verbrauchern mit unterschiedlichen Arten von Widerständen ohne Kurzschluß und mit Kurzschluß zeigt auf, welche typischen Verläufe Prüfspannung $u_{Prüf}$ und Prüfstrom $i_{Prüf}$ in den einzelnen Fällen haben. Die unterschiedlichen Fallgestaltungen sind anhand Figur 2 verdeutlicht.

In den ersten drei Zeilen der Figur 2 werden unterschiedliche Verbraucher ohne Kurzschluß betrachtet: Sofern ein rein Ohm'scher Widerstand auftritt, ergibt sich gemäß der ersten Zeile ein rechteckförmiger Spannungsverlauf, dem in gleicher zeitlicher Folge ein rechteckförmiger Stromverlauf folgt. Ist dagegen der Verbraucher eine Induktivität, was beispielsweise bei einem Motor gegeben ist, wird entsprechend der zweiten Zeile die Prüfspannung $u_{Prüf}$ ansteigen, rasch abfallen und nach einem Umschlagen in den entgegengesetzten Wert wieder rasch abfallen. Liegt ein kapazitiver Widerstand vor, was bei einer Kompensationsanlage, bei Leuchtstofflampen, bei Vorschaltgeräten oder Netzteilen von elektronischen Geräten, wie beispielsweise eines PC, gegeben ist, wird entsprechend der dritten Zeile die Prüfspannung $u_{Prüf}$ entsprechend einer asymptotischen Kurve zu einem Maximum ansteigen. Entsprechend vermindert sich der Stromverlauf von einem Maximalwert nach einer Exponentialfunktion zu einem Minimalwert.

Die beiden letzten Zeilen der Figur 2 geben Kurzschlußfälle wieder: Ein Kurzschluß ist durch eine niederohmige Verbindung definiert, bei dem entsprechend der vierten Zeile bei einem Nullwert der Prüfspannung ein steiles Ansteigen des Prüfstromes mit rechteckförmigem Stromverlauf verläuft. Speziell bei einem Lichtbogenkurzschluß verläuft die Spannung entsprechend der fünften Zeile von einem Maximum steil abfallend und ungleichmäßig zu Null, während sich der Stromverlauf ungleichmäßig auf hohem Niveau bewegt.

Sofern nun bei den vorgegebenen Anordnungen Kurzschlüsse vorliegen, gilt bei Verwendung des strombegrenzenden Widerstandes für den Prüfstrom $i_{Prüf}$:

$$i_{Prüf} = \sqrt{2} \ x \ u_N/R_B \qquad\qquad\qquad (1) \ ,$$

wobei $U_N$ die Nennspannung und $R_B$ den Widerstandswert des Prüfwiderstandes 5 bedeuten. Wenn man in vorbeschriebenen Konstellationen ohne Kurzschluß und mit Kurzschluß die Prüfspannung $u_{Prüf}$ und den Prüfstrom $i_{Prüf}$ an zwei unterschiedlichen Zeitpunkten $t_1$ und $t_2$ vergleicht, vorzugsweise in etwa am Beginn und Ende des Prüfintervalles, mit entsprechenden Schwellwerten $U_T$ und $I_T$, so ergibt sich folgende Vorschrift zur Erkennung von Kurzschlüssen

$$Kurzschlu\beta = (u_{t2} < U_{T2}) \wedge (i_{t1} > I_{T1}) \wedge (i_{t2} > I_{T2}) \qquad (2) \ ,$$

wobei

$U_{T2}$: Schwellwert der Prüfspannung $u_{prüf}$ zum Zeitpunkt $t_2$
$I_{T1}$: Schwellwert des Prüfstromes $i_{prüf}$ zum Zeitpunkt $t_1$
$I_{T2}$: Schwellwert des Prüfstromes $i_{prüf}$ zum Zeitpunkt $t_2$

bedeuten. Die Wahl der Zeitpunkte t1 und t2 und die Bemessung der Schwellwerte $U_T$ und $I_T$ ist von den Netzbedingungen, der Impedanz des zu prüfenden Abzweiges und dem gewählten Prüfwiderstand abhängig.

Eine andere Vorschrift kann dadurch abgeleitet werden, daß nach Ablauf einer Mindestprüfdauer ($t_P$) ausschließlich die Prüfspannung $u_{prüf}$ erfaßt wird. Bei Überschreiten einer Schwellspannung $U_t$ kann dann die Prüfung mit dem Ergebnis "kein Kurzschluß" abgebrochen werden und es gilt:

$$Kein\ Kurzschlu\beta = (u_t > U_T) \wedge (t > t_P) \qquad (3),$$

wobei

$U_T$:     Schwellwert der Prüfspannung $\overline{u}_{prüf}$ für das Püfergebnis "kein Kurzschluß"
$t_P$:     Mindestprüfdauer

bedeuten. Zusätzlich kann zur Erhöhung der Aussagesicherheit gefordert werden, daß die Zeitdauer, in welcher die Prüfspannung $u_{Prüf}$ größer als die Schwellspannung $U_T$ ist, einen bestimmten Mindestwert überschreitet.

Das Kriterium gemäß Gleichung (3) besitzt gegenüber dem Kriterium gemäß Gleichung (2) den Vorteil einer geringeren Prüfdauer, die abhängig von der Impedanz des zu prüfenden Abzweiges ist, so daß insbesondere bei induktiven Abzweigen keine größeren Ströme durch den Halbleiterschalter 3 abzuschalten sind. Mindestprüfdauer $t_P$ und Schwellspannung $U_T$ sind vorzugsweise so zu bemessen, daß im Abzweig latent vorhandene Lichtbogen-Kurzschlüsse nach Ablauf von $t_P$ gezündet sind und deren Brennspannung unter der Schwellspannung $U_T$ liegt.

Sofern durch die Verfahren entsprechend den Gleichungen (2) und/oder (3) kein Kurzschluß erkannt wird, kann der jeweilige Abzweig dem Netz komplett zugeschaltet werden, wobei dann der Halbleiterschalter 3 und der Prüfwiderstand 5 überbrückt werden.

In Figur 3 ist eine Schaltungsanordnung für einen dreiphasige Prüfung nach dem vorbeschriebenen Verfahren verdeutlicht. Eine solche Schaltung ist für dreiphasige Abzweige sinnvoll, da sowohl Erd- bzw. Neutralleiterschlüsse als auch Kurzschlüsse zwischen zwei oder drei Außenleitern auftreten können.

In Analogie zur Schaltung gemäß Figur 1 sind in Figur 3 Halbleiterschalter $3^1$, $3^2$ und $3^3$ in jeder Phase und Prüfwiderstände $5^1$, $5^2$ und $5^3$ in den einzelnen Außenleitern vorgesehen. Die Ansteuerung der einzelnen Halbleiterschalter $3^1$, $3^2$ und $3^3$ erfolgt durch die gemeinsame Einheit 4, der entsprechend Figur 1 eine übergeordnete Steuerung 6 zugeordnet ist. Daneben ist nunmehr eine zentrale Einheit 7 zur Auswertung vorhanden. Steuereinheit 6 und Auswerteinheit 7 sind jeweils mit den Phasen einzeln und untereinander unter Einbindung von Widerständen R mit einem künstlichen Sternpunkt 8 verbunden. Der Neutral- bzw. Erdleiter PEN ist ebenfalls über drei definierte Widerstände $R_2$ mit einem gemeinsamen Sternpunkt 9 an die Außenleiter mit Widerständen $R_B$ angeschlossen.

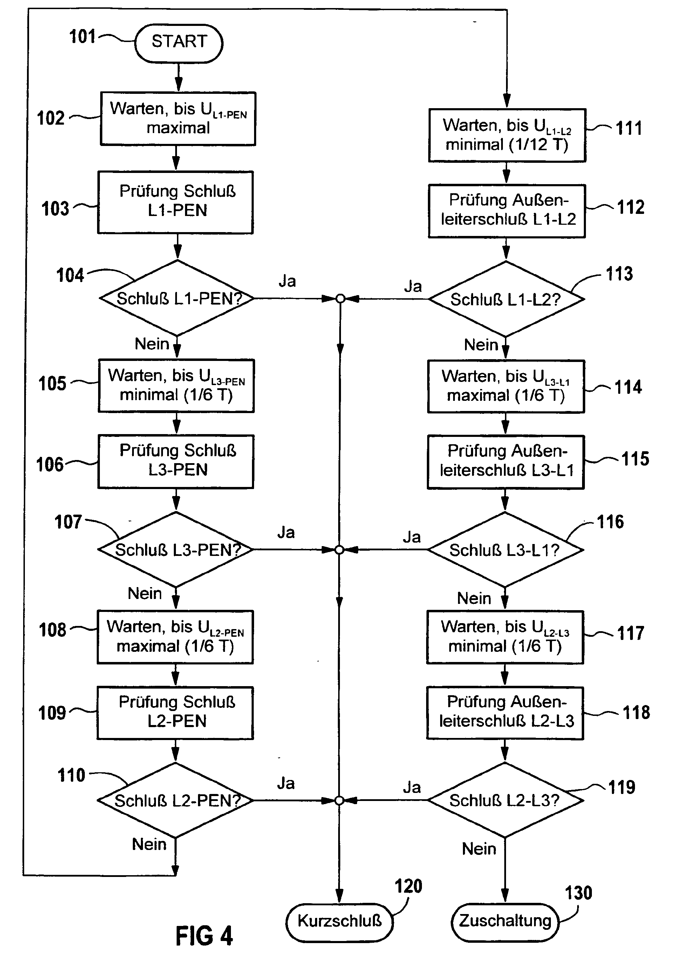

Die Prüfung erfolgt bei einer dreiphasigen Prüfung entsprechend einem vorgegebenen Algorithmus, der als Flußdiagramm in Figur 4 wiedergegeben ist. Die wesentlichen Schritte sind dabei anhand der einzelnen Positionen 101 bis 120 verdeutlicht, wobei jeweils Entscheidungskriterien für den Kurzschluß abgefragt werden,

Im einzelnen wird folgendermaßen vorgegangen: Nach dem Start erfolgt die Einschaltung des Halbleiterschalters im Außenleiter L1 im Scheitelwert der Spannung $U_{L1-N}$ und die Auswertung des Prüfstroms $I_1$ und der Prüfspannung zwischen dem Abzweig L1 und dem Neutralleiter. Dabei wird gemäß Position 102 abgewartet, bis $U_{L1-PEN}$ maximal ist und dann gemäß Position 102 die Prüfung abgeschlossen. Sofern ein Kurzschluß nach einem der oben angegebenen Kriterien vorliegt, erfolgt an Position 104 die Entscheidung Ja und der Kurzschluß wird angezeigt. Liegt kein Kurzschluß vor, wird in der Prüfung fortgefahren. Es erfolgt in diesem Fall gemäß den Positionen 105 und 106 die Prüfung des Zweiges L3 mit der Entscheidung, ob im Zweig L3 ein Kurzschluß vorliegt und anschließend die entsprechende Prüfung in dem Leiterzweig L2 entsprechend den Positionen 108 bis 110. Im einzelnen werden im Abstand von jeweils 1/6 der Netzperiode, das heißt 60°, die Außenleiter L3 und L2 auf Erdschluß geprüft, indem die entsprechenden Halbleiterschalter $3^3$ und $3^2$ kurzzeitig eingeschaltet werden.

Nach der Prüfung des Erdschlusses im Außenleiter L2 gemäß Position 110 werden um 1/12 Netzperiode, das heißt 30°, versetzt beide Halbleiterschalter $3^1$ und $3^2$ in den Außenleitern L1 und L2 gemeinsam eingeschaltet. Entsprechend den Positionen 111 bis 112 wird der Außenleiterschluß zwischen L1 und L2 geprüft, wobei bei Feststellung eines Schlusses wiederum eine entsprechende Anzeige an der Position 120 erfolgt.

Sofern letzteres nicht der Fall ist, erfolgt um jeweils 1/6 Netzperiode, das heißt 60°, versetzt die Prüfung der Außenleiterschlüsse L3-L1 und L2-L3. Ersteres erfolgt anhand der Positionen 114 bis 116, letzteres anhand der Positionen 117 bis 118, wobei wiederum bei Erkennen eines Kurzschlusses der Prüfalgorithmus abgebrochen, die Anzeige an der Position 120 erfolgt und die Zuschaltung des Abzweiges verriegelt wird. Wenn der Prüfalgorithmus bis zum Abschluß durchgeführt ist, kann gemäß Position 121 die Zuschaltung der Abzweige erfolgen.

Für den Fall, daß kein Anschluß des Neutralleiters an der Prüfeinheit vorgesehen ist, wird an der Einspeiseseite durch drei Ohm'sche Widerstände $R_1$ ein künstlicher Sternpunkt 8 geschaffen, welcher bei symmetrischen Spannungsverhältnissen Erdpotential aufweist.

Wesentlich ist also bei dem beschriebenen Verfahren und den beispielhaften Anordnungen, daß durch die Anordnung eines geeigneten Prüfwiderstandes im Prüfstromkreis der Prüfstrom begrenzt wird und gleichermaßen Prüfstrom und Prüfspannung zur Erkennung von Kurzschlüssen in den Abzweigen verwendet werden. Dabei können durch geeignete Anpassung der Parameter die unterschiedlichsten Kurzschlüsse selektiert werden. Durch die Anwendung des Verfahrens auf dreiphasige Netze können auch Erd- bzw. Neutralleiterschlüsse sowie Außenleiterschlüsse gegeneinander separat erkannt werden. Dies kann bei Vorgabe eines geeigneten Algorithmus softwaremäßig gesteuert für alle Leiter nacheinander in einer Netzperiode erfolgen.

**Patentansprüche**

1.   Verfahren zur Verhinderung des Draufschaltens auf bestehende Kurzschlüsse in elektrischen Abzweigen, wobei in einem Prüfkreis zu einem definierten Zeitpunkt der Netzspannung eine kurzzeitige Netzzuschaltung erfolgt und zumindest der Strom innerhalb eines Prüfintervalls erfasst und als Entscheidungskriterium für einen Kurzschluss ausgewertet wird, mit folgenden Maßnahmen:

(a) Es wird eine zusätzliche Prüfimpedanz, die im Prüfkreis in Reihe zu einem Schalter angeordnet ist und die den Kurzschlussstrom begrenzt, verwendet,

(b) allein der Prüfstrom ($i_{prüf}$) und die Prüfspannung ($u_{prüf}$) am Abzweig werden zur Erkennung des Kurzschlusses herangezogen, wobei der Prüfstrom ($i_{prüf}$) zu einem ersten Zeitpunkt ($t_1$) am Beginn des Prüfintervalls und sowohl der Prüfstrom ($i_{prüf}$) als auch die Prüfspannung ($u_{prüf}$) zu einem zweiten Zeitpunkt ($t_2$) am Ende des Prüfintervalls gemessen werden, jeweils mit Schwellwerten verglichen und durch Plausibilitätsbetrachtungen Aussagen über das Vorliegen eines Kurzschlusses abgeleitet werden,

(c) für das Vorliegen eines Kurzschlusses gilt:

$$Kurzschluss = (u_{t2} < U_{T2}) \wedge (i_{t1} > I_{T1}) \wedge (i_{t2} > I_{T2}) \quad,$$

wobei

$U_{T2}$ : Schwellwert der Prüfspannung $u_{prüf}$ zum Zeitpunkt $t_2$

$I_{T1}$ : Schwellwert des Prüfstromes $i_{prüf}$ zum Zeitpunkt $t_1$

$I_{T2}$ : Schwellwert des Prüfstromes $i_{prüf}$ zum Zeitpunkt $t_2$

bedeuten.

2.   Verfahren nach Anspruch 1, **dadurch gekennzeichnet, dass** bei Nichterfüllung der Bedingung (c) für den Fall "Kein Kurzschluss" gilt:

$$Kein\ Kurzschluss = (u_t > U_T) \wedge (t > t_P) \quad,$$

wobei

$U_T$: Schwellwert der Prüfspannung $u_{prüf}$ für das Prüfergebnis "kein Kurzschluss"

$t_P$: Mindestprüfdauer

bedeuten.

3. Verfahren nach Anspruch 1 oder Anspruch 2, **dadurch gekennzeichnet, dass** der Prüfstrom ($i_{prüf}$) und/oder die Prüfspannung ($u_{prüf}$) unmittelbar am Abzweig erfasst und ausgewertet werden.

4. Verfahren nach einem der vorhergehenden Ansprüche, wobei nur die Spannung ausgewertet wird, **dadurch gekennzeichnet, dass** die Netzzuschaltung im Scheitelwert der Netzspannung erfolgt.

5. Verfahren nach einem der vorhergehenden Ansprüche, **gekennzeichnet** in der Anwendung zur einphasigen Prüfung eines Kurzschlusses zwischen Leiter und Neutralleiter.

6. Verfahren nach einem der Ansprüche 1 bis 5, **gekennzeichnet** in der Anwendung zur dreiphasigen Prüfung von Kurzschlüssen zwischen den einzelnen Außenleitern und dem Neutralleiter und/oder den Außenleitern untereinander.

7. Verfahren nach Anspruch 6, **dadurch gekennzeichnet, dass** die Prüfung von etwaigen Erd- bzw. Neutralleiterschlüssen einerseits sowie von Außenleiterschlüssen andererseits nacheinander in einer Netzperiode erfolgt.

8. Anordnung mit einer Diagnose- und Schutzschaltung für einen Netzabzweig, bei der in einem Prüfkreis wenigstens ein Halbleiterschalter (3) vorhanden ist, dessen Strom bzw. Stromintegral als Entscheidungskriterium für einen Kurzschluss auswertbar ist,
**dadurch gekennzeichnet, dass**

- der Prüfkreis einen in Reihe zum Halbleiterschalter (3) geschalteten und den Kurzschussstrom begrenzenden Prüfwiderstand (5) mit definiertem Widerstand ($R_B$) enthält, der deutlich größer als die Netzimpedanz ($Z_{Netz}$) ist,
- eine Steuereinheit zur softwaremäßig gesteuerten Zuschaltung der Netzimpedanz vorhanden ist, welche zur Erkennung des Kurzschlusses, allein den Prüfstrom ($i_{prüf}$) und die Prüfspannung ($u_{prüf}$) am Abzweig heranzieht, den Prüfstrom zu einem ersten Zeitpunkt ($t_1$), am Beginn des Prüfintervalls und sowohl den Prüfstrom als auch die Prüfspannung zu einem zweiten Zeitpunkt ($t_2$), am Ende des Prüfintervalls misst und jeweils mit Schwellwerten vergleicht, und durch folgende Plausibilitätsbetrachtungen Aussagen über das Vorliegen eines Kurzschlusses ableitet:

$$Kurzschluss = (u_{t2} < U_{T2}) \wedge (i_{t1} > I_{T1}) \wedge (i_{t2} > I_{T2})$$

wobei

$U_{T2}$: Schwellwert der Prüfspannung $u_{prüf}$ zum Zeitpunkt $t_2$
$I_{T1}$: Schwellwert des Prüfstromes $i_{prüf}$ zum Zeitpunkt $t_1$
$I_{T2}$: Schwellwert des Prüfstromes $i_{prüf}$ zum Zeitpunkt $t_2$

bedeuten.

9. Anordnung nach Anspruch 8, **dadurch gekennzeichnet, dass** dem Halbleiterschalter (3) eine Ansteuereinheit (4) zugeordnet ist, die von der Steuereinheit (6) angesteuert wird.

10. Anordnung nach Anspruch 8, **dadurch gekennzeichnet, dass** zur Verwendung bei der dreiphasigen Prüfung jedem Halbleiterschalter ($3^1$, $3^2$, $3^3$) ein eigener Prüfwiderstand ($5^1$, $5^2$, $5^3$), mit gleichem Widerstandswert ($R_B$) zugeordnet ist, wobei im dreiphasigen Netz den einzelnen Zweigen ($U_{L-n}$, $U_{L2-n}$, $U_{L3-n}$) eine gemeinsame Einheit zur Ansteuerung (4) der Halbleiterschalter ($3^1$, $3^2$, $3^3$) und eine gemeinsame Steuereinheit (6) zugeordnet ist.

11. Anordnung nach Anspruch 10, **dadurch gekennzeichnet, dass** eine gemeinsame Einheit (7) zur Auswertung des Prüfstromes ($i_{prüf}$) und/oder der Prüfspannung ($u_{prüf}$) vorhanden ist.

12. Anordnung nach einem der Ansprüche 10 oder 11, **dadurch gekennzeichnet, dass** von den einzelnen Zweigen des dreiphasigen Netzes über Widerstände mit definiertem Widerstandswert ($R_1$, $R_2$) künstliche Sternpunkte (8, 9) mit Nullpotential gebildet werden.

**Claims**

1. Method for preventing making on existing short circuits in electrical branches, with the power supply momentarily being connected in a test circuit at a defined instant of the power supply voltage and at least the current being detected within a test interval and being evaluated as a decision criterion for a short circuit, with the following measures:

   (a) An additional test impedance which is arranged in the test circuit in series with a switch and which limits the short-circuit current is used,
   (b) solely the test current ($i_{test}$) and the test voltage ($u_{test}$) at the branch are used for identification of the short circuit, the test current ($i_{test}$) being measured at a first instant ($t_1$) at the beginning of the test interval and both the test current ($i_{test}$) and the test voltage ($u_{test}$) being measured at a second instant ($t_2$) at the end of the test interval, and in each case being compared with threshold values, and statements about the presence of a short circuit being derived through plausibility considerations,
   (c) the following holds true for the presence of a short circuit:

$$short\ circuit\ =\ (u_{t2}\ <\ U_{T2}) \wedge (i_{t1} > I_{T1}) \wedge (i_{t2} > I_{T2}),$$

   where the designations have the following meanings
   $U_{T2}$: threshold value of the test voltage $u_{test}$ at the instant $t_2$
   $I_{T1}$: threshold value of the test current $i_{test}$ at the instant $t_1$
   $I_{T2}$: threshold value of the test current $i_{test}$ at the instant $t_2$.

2. Method according to Claim 1, **characterized in that** the following holds true upon non-compliance with condition (c) for the case of "no short circuit":

$$no\ short\ circuit\ =\ (u_t\ >\ U_T) \wedge (t > t_p),$$

   where the designations have the following meanings
   $U_T$: threshold value of the test voltage $u_{test}$ for the test result "no short circuit"
   $t_P$: minimum test duration.

3. Method according to Claim 1 or Claim 2, **characterized in that** the test current ($i_{test}$) and/or the test voltage ($u_{test}$) are detected directly at the branch and evaluated.

4. Method according to one of the preceding claims, only the voltage being evaluated, **characterized in that** the power supply is connected at the peak value of the power supply voltage.

5. Method according to one of the preceding claims, **characterized in** the application for single-phase testing of a short circuit between conductor and neutral conductor.

6. Method according to one of Claims 1 to 5, **characterized** for the three-phase testing of short circuits between the individual external conductors and the neutral conductor and/or among the external conductors.

7. Method according to Claim 6, **characterized in that** the testing of possible ground or neutral conductor faults, on the one hand, and also of external conductor faults, on the other hand, is effected successively in a power supply period.

8. Arrangement having a diagnosis and protection circuit for a power supply branch, which contains in a test circuit at least one semiconductor switch (3) whose current or current integral can be evaluated as a decision criterion for a short circuit,
   **characterized in that**

   - the test circuit contains a test resistor (5), which is connected in series with the semiconductor switch (3) and limits the short-circuit current and has a defined resistance ($R_B$) which is significantly greater than the power

supply impedance ($Z_{\text{power supply}}$),
- a control unit for the software- controlled connection of the power supply impedance is present, which uses, for identification of the short circuit, solely the test current ($i_{\text{test}}$) and the test voltage ($u_{\text{test}}$) at the branch, measures the test current at a first instant ($t_1$), at the beginning of the test interval, and measures both the test current and the test voltage at a second instant ($t_2$), at the end of the test interval, and compares them in each case with threshold values, and derives statements about the presence of a short circuit through the following plausibility considerations:

$$short\ circuit\ =\ (u_{t2}\ <\ U_{T2}) \wedge (i_{t1} > I_{T1}) \wedge (i_{t2} > I_{T2}),$$

where the designations have the following meanings
$U_{T2}$: threshold value of the test voltage $u_{\text{test}}$ at the instant $t_2$
$I_{T1}$: threshold value of the test current $i_{\text{test}}$ at the instant $t_1$
$I_{T2}$: threshold value of the test current $i_{\text{test}}$ at the instant $t_2$.

9. Arrangement according to Claim 8, **characterized in that** the semiconductor switch (3) is assigned a drive unit (4), which is driven by the control unit (6).

10. Arrangement according to Claim 8, **characterized in that**, for use in the case of the three-phase testing, each semiconductor switch ($3^1$, $3^2$, $3^3$) is assigned a dedicated test resistor ($5^1$, $5^2$, $5^3$) having an identical resistance ($R_B$), in which case, in the three-phase power supply, the individual branches ($U_{L-n}$, $U_{L2-n}$, $U_{L3-n}$) are assigned a common unit for driving (4) the semiconductor switches ($3^1$, $3^2$, $3^3$) and a common control unit (6).

11. Arrangement according to Claim 10, **characterized in that** a common unit (7) is present for evaluating the test current ($i_{\text{test}}$) and/or the test voltage ($u_{\text{test}}$).

12. Arrangement according to either of Claims 10 and 11, **characterized in that** artificial neutral points (8, 9) with zero potential are formed by the individual branches of the three-phase power supply via resistors having a defined resistance ($R_1$, $R_2$).

**Revendications**

1. Procédé pour empêcher l'enclenchement sur des courts-circuits existants dans des dérivations électriques, une brève mise en circuit étant effectuée dans un circuit de test à un instant défini de la tension de réseau et au moins le courant à l'intérieur d'un intervalle de test étant détecté et évalué comme critère de décision pour un court-circuit, avec les mesures suivantes :

(a) on utilise une impédance de test supplémentaire qui est montée dans le circuit de test en série avec un interrupteur et qui limite le courant de court-circuit,
(b) seuls le courant de test ($i_{\text{prüf}}$) et la tension de test ($u_{\text{prüf}}$) sur la dérivation sont exploités pour la détection du court-circuit, le courant de test ($i_{\text{prüf}}$) étant mesuré à un premier instant ($t_1$) au début de l'intervalle de test et le courant de test ($i_{\text{prüf}}$) ainsi que la tension de test ($u_{\text{prüf}}$) étant mesurés à un deuxième instant ($t_2$) à la fin de l'intervalle de test, ces valeurs étant comparées à des valeurs de seuil et des renseignements concernant l'existence d'un court-circuit étant déduits par des considérations de vraisemblance,
(c) pour l'existence d'un court-circuit, on a :

$$court\text{-}circuit\ =\ (u_{t2}\ <\ U_{T2})\ \wedge\ (i_{t1}\ >\ I_{T1})\ \wedge\ (i_{t2}\ >\ I_{T2}),$$

avec

$U_{T2}$ : valeur de seuil de la tension de test $u_{\text{prüf}}$ à l'instant $t_2$
$I_{T1}$ : valeur de seuil du courant de test $i_{\text{prüf}}$ à l'instant $t_1$
$I_{T2}$ : valeur de seuil du courant de test $i_{\text{prüf}}$ à l'instant $t_2$.

**2.** Procédé selon la revendication 1, **caractérisé par le fait que**, si la condition (c) n'est pas satisfaite, on a pour le cas "pas de court-circuit" :

$$\texttt{pas de court-circuit} = (u_t > U_T) \wedge (t > t_p)$$

avec

$U_T$ : valeur de seuil de la tension de test $u_{prüf}$ pour le résultat de test "pas de court-circuit"
$t_p$ : durée minimale de test.

**3.** Procédé selon la revendication 1 ou la revendication 2, **caractérisé par le fait que** le courant de test ($i_{prüf}$) et/ou la tension de test ($u_{prüf}$) sont détectés directement sur la dérivation et sont évalués.

**4.** Procédé selon l'une des revendications précédentes, seule la tension étant évaluée, **caractérisé par le fait que** la mise en circuit s'effectue à la valeur de crête de la tension de réseau.

**5.** Procédé selon l'une des revendications précédentes, **caractérisé par** l'application au test monophasé d'un court-circuit entre conducteur et conducteur neutre.

**6.** Procédé selon l'une des revendications 1 à 5, **caractérisé par** l'application au test triphasé de courts-circuits entre les différents conducteurs extérieurs et le conducteur neutre et/ou entre les conducteurs extérieurs entre eux.

**7.** Procédé selon la revendication 6, **caractérisé par le fait que** les tests d'éventuels courts-circuits à la terre ou au conducteur neutre d'une part ainsi que de courts-circuits aux conducteurs extérieurs d'autre part s'effectuent successivement dans une période de réseau.

**8.** Dispositif comportant un circuit de diagnostic et de protection pour une dérivation de réseau, dans lequel il y a dans un circuit de test au moins un interrupteur semi-conducteur (3) dont le courant ou l'intégrale de courant est évaluable comme critère de décision pour un court-circuit,
**caractérisé par le fait que**

- le circuit de test contient une résistance de test (5) montée en série avec l'interrupteur semi-conducteur (3), limitant le courant de court-circuit et ayant une résistance définie ($R_B$) qui est nettement supérieure à l'impédance de réseau ($Z_{Netz}$),
- il y a une unité de commande qui est destinée à la mise en circuit, commandée par logiciel, de l'impédance de réseau, qui exploite pour la détection du court-circuit seulement le courant de test ($i_{prüf}$) et la tension de test ($u_{prüf}$) sur la dérivation, qui mesure le courant de test à un premier instant ($t_1$) au début de l'intervalle de test et aussi bien le courant de test que la tension de test à un deuxième instant ($t_2$) à la fin de l'intervalle de test, qui compare ces valeurs à des valeurs de seuil et qui en déduit par des considérations de vraisemblance des renseignements sur l'existence d'un court-circuit :

$$\texttt{court-circuit} = (u_{t2} < U_{T2}) \wedge (i_{t1} > I_{T1}) \wedge (i_{t2} > I_{T2})$$

avec

$U_{T2}$ : valeur de seuil de la tension de test $u_{Prüf}$ à l'instant $t_2$
$I_{T1}$ : valeur de seuil du courant de test $i_{prüf}$ à l'instant $t_1$
$I_{T2}$ : valeur de seuil du courant de test $i_{prüf}$ à l'instant $t_2$.

**9.** Dispositif selon la revendication 8, **caractérisé par le fait qu'**il est associé à l'interrupteur semi-conducteur (3) une unité de commande (4) qui est commandée par l'unité de commande (6).

**10.** Dispositif selon la revendication 8, **caractérisé par le fait que**, pour l'utilisation dans le cas du test triphasé, il est associé à chaque interrupteur semi-conducteur ($3^1$, $3^2$, $3^3$) une résistance de test particulière ($5^1$, $5^2$, $5^3$) avec une valeur résistive identique ($R_B$), une unité commune pour la commande (4) des interrupteurs semi-conducteurs ($3^1$, $3^2$, $3^3$) et une unité de commande commune (6) étant associées aux différentes branches ($U_{L-n}$, $U_{L2-n}$, $U_{L3-n}$) dans le réseau triphasé.

**11.** Dispositif selon la revendication 10, **caractérisé par le fait qu'**il y a une unité commune (7) pour l'évaluation du courant de test ($i_{prüf}$) et/ou de la tension de test ($u_{prüf}$).

**12.** Dispositif selon l'une des revendications 10 ou 11, **caractérisé par le fait que** des points neutres artificiels (8, 9) avec potentiel nul sont formés par les différentes branches du réseau triphasé par l'intermédiaire de résistances ayant une valeur résistive définie ($R_1$, $R_2$) .

**FIG 1**

**FIG 3**

**FIG 2**

**FIG 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0563695 A2
- DE 19601878 A1
- US 4894745 A